# EUROPEAN PATENT APPLICATION

(11) **EP 2 039 974 A2**
(43) Date of publication of application: **25.03.2009**
(21) Application number: 08156126.8
(22) Date of filing: 14.05.2008
(51) Int. Cl.: F16L 37/40, F16L 37/092

(54) **Pipe connector**

(30) Priority: 17.09.2007 DE 202007013025 U
(71) Applicant: Lai Chang Hsueh-Feng, Taichung (TW)
(72) Inventor: Lai Chang Hsueh-Feng, Taichung (TW)
(74) Representative: Viering, Jentschura & Partner

(57) **Abstract**

A pipe connector includes a casing (10), a valve block (20) mounted in the first end of the casing and movable between a close position and an open position and normally supported in the close position by a spring (25) inside the casing, a locking block holder (30) mounted in the second end of the casing and movable between a locking position and an unlocking position and normally supported in the locking position by a spring (35) inside the casing, and locking blocks (32) transversely mounted in the locking block holder and movable with the locking block holder along a tapered inside all portion of the casing to lock/unlock a pipe (50) that is inserted into the locking block holder to move the valve block to the open position.

## Description

### BACKGROUND OF THE INVENTION

### 1. Field of the Invention:

The present invention relates to pipe connector and more particularly, to such a pipe connector, which allows quick mounting/dismounting of the pipe without any tools.

### 2. Description of the Related Art:

Pipes and pipe connectors are commonly used for delivering a flow of gas or fluid. A pipe connector to which the invention pertains is adapted to receive a rigid pipe. According to conventional designs, a tool must be used to fasten tight the pipe connector after insertion of the pipe into the pipe connector, or to unfasten the pipe connector when wishing to disconnect the pipe from the pipe connector. It takes much time to fasten tight or unfasten the pipe connector. Further, when fasten the pipe connector excessively tight, the parts of the pipe connector or the pipe may be damaged accidentally. Further, before disconnecting the pipe from the pipe connector, the worker must turn off the flow source and empty the pipe. However, the worker may spend a lot of time to find the location of the main valve of the flow source.

### SUMMARY OF THE INVENTION

The present invention has been accomplished under the circumstances in view. It is the main object of the present invention to provide a pipe connector, which automatically locks the pipe without any supplementary tools. It is another object of the present invention to provide a pipe connector, which allows quick disconnection of the pipe without any supplementary tools. It is still another object of the present invention to provide a pipe connector, which automatically blocks the passage after removal of the pipe. To achieve these and other objects of the present invention, the pipe connector comprises a cylindrical casing, the cylindrical casing having an accommodation open chamber longitudinally extending through two distal ends thereof, the accommodation open chamber having a first end and a second end; a valve block mounted in the first end of the accommodation open chamber and axially movable from between a close position and an open position, the valve block having at least one input port and at least one output port, the at least one output port being closed when the valve block is in the close position, the at least one output port being opened when the valve block is in the open position; a locking block holder mounted in the second end of the accommodation open chamber and axially movable between a locking position and an unlocking position, the locking block holder having a center through hole for receiving a pipe; a plurality of locking blocks respectively transversely movably mounted in the locking block holder, the locking blocks each having an engagement face, the engagement face of each of the locking blocks being respectively forced into the center through hole of the locking block holder to engage the pipe being inserted into the center through hole of the locking block holder when the locking block holder is in the locking position, the engagement face of each of the locking blocks being respectively disengaged from the pipe being inserted into the center through hole of the locking block holder when the locking block holder is in the unlocking position; and a sealing structure mounted in the accommodation open chamber between the valve block and the locking block holder, the sealing structure defining a center opening for receiving the pipe that is inserted into the center through hole of the locking block holder.

### BRIEF DESCRIPTION OF THE DRAWINGS

FIG. 1 is an exploded view of a pipe connector according to the present invention.

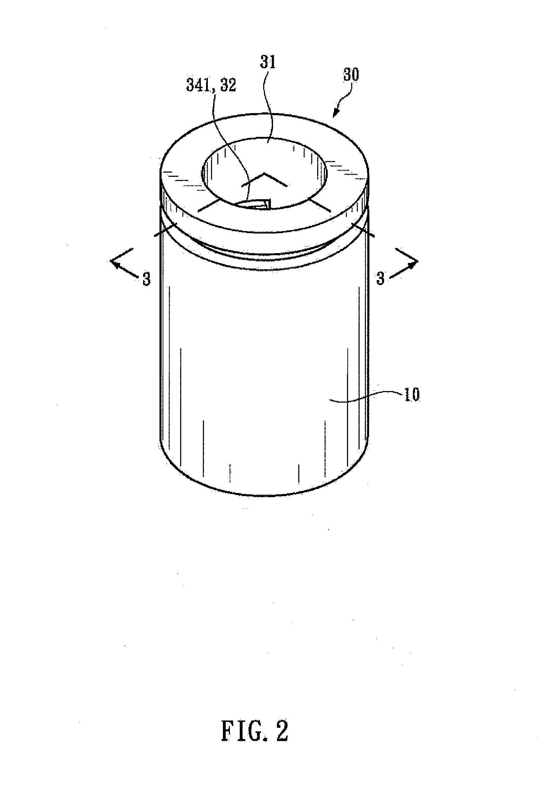

FIG. 2 is an elevational assembly view of the pipe connector according to the present invention.
FIG. 3 is a sectional view taken in an enlarged scale along line 3-3 of FIG. 2.
FIG. 4 is a schematic sectional view showing the pipe connector connected to a pipe according to the present invention.
FIG. 5 is a schematic sectional view showing the separation action of the pipe connector from the pipe according to the present invention.

### DETAILED DESCRIPTION OF THE PREFERRED EMBODIMENT

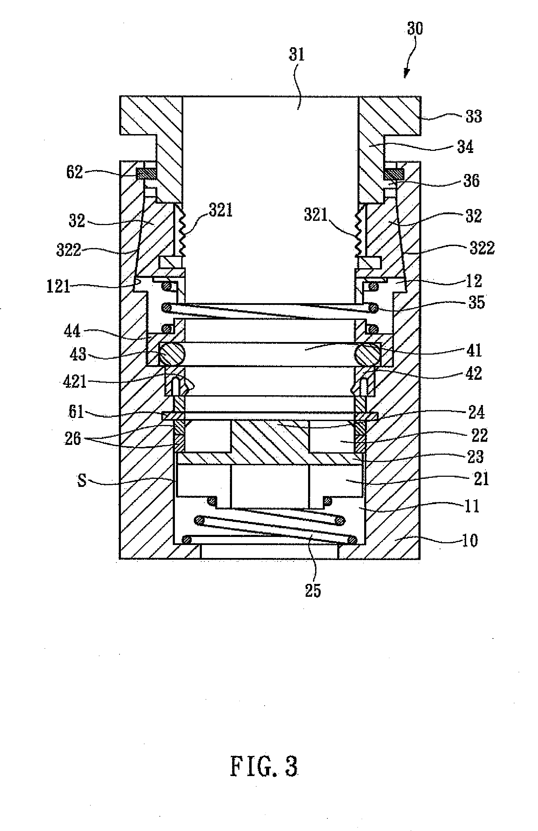

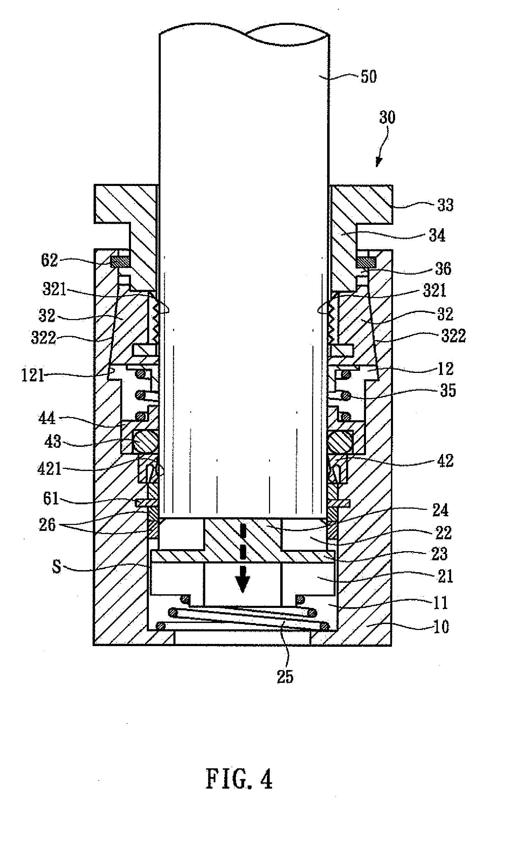

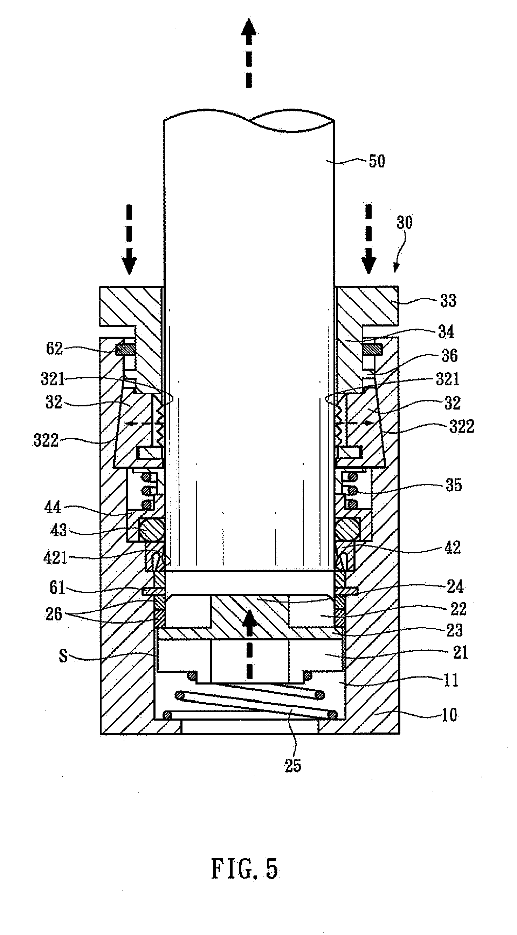

Referring to FIG. 3, a pipe connector in accordance with the present invention is shown comprising:
a cylindrical casing **10,** which has an accommodation open chamber **11** longitudinally extending through two distal ends thereof;
a valve block **20,** which is mounted in one end, namely, the first end of the accommodation open chamber **11** inside the cylindrical casing **10** and normally positioned in a close position (see FIG. 3) and axially movable from the close position (see FIG. 3) to an open position (see FIG. 4), having at least one input port **21** and at least one output port **22,** which output port **22** is closed when the valve block **20** is in the close position or opened when the valve block is in the open position;
a locking block holder **30,** which is mounted in the other end, namely, the second end of the accommodation open chamber **11** of the casing **1** and normally set in a locking position (see FIG. 3) and axially movable from the locking position (see FIG. 3) to an unlocking position (see FIG. 5), having a center through hole **31** for receiving a pipe;
a plurality of locking blocks **32** respectively transversely movably mounted in the locking block holder **30,** each locking block **32** having an engagement face **321,** which is forced into the center through hole **31** of the locking block holder **30** when the locking block holder **30** is in the locking position or forced out of the center through hole **31** of the locking block holder **30** when the locking block holder **30** is in the unlocking position; and
a sealing structure **40,** which is mounted in the accommodation open chamber **11** of the casing **10** between the valve block **20** and the locking block holder **30,** defining a center opening **41** for receiving the pipe that is inserted into the center through hole **31** of the locking block holder **30.**

When a pipe **50** is inserted with one end thereof into the center through hole **31** of the locking block holder **30** and the center opening **41** of the sealing structure **40,** the pipe **50** pushes the valve block **20** from the close position to the open position, and the locking block holder **30** is moved to the locking position where the engagement face **321** of each locking block **32** is forced into the center through hole **31** of the locking block holder **30** and kept engaged with the periphery of the pipe **50** to lock the pipe **50** to the casing **10.** Therefore, the flow of air or fluid (not shown) is allowed to pass through the output port **22** of the valve block **20** into the pipe **50.** At the same time, the sealing structure **40** is tightly secured to the periphery of the pipe **50** to prevent leaking of the flow of air or fluid out of the pipe **50.**

Further, when applied an external force to move the locking block holder **30** from the locking position to the unlocking position to disengage the locking blocks **32** from the pipe **50,** the pipe **50** can easily be removed from the pipe connector.

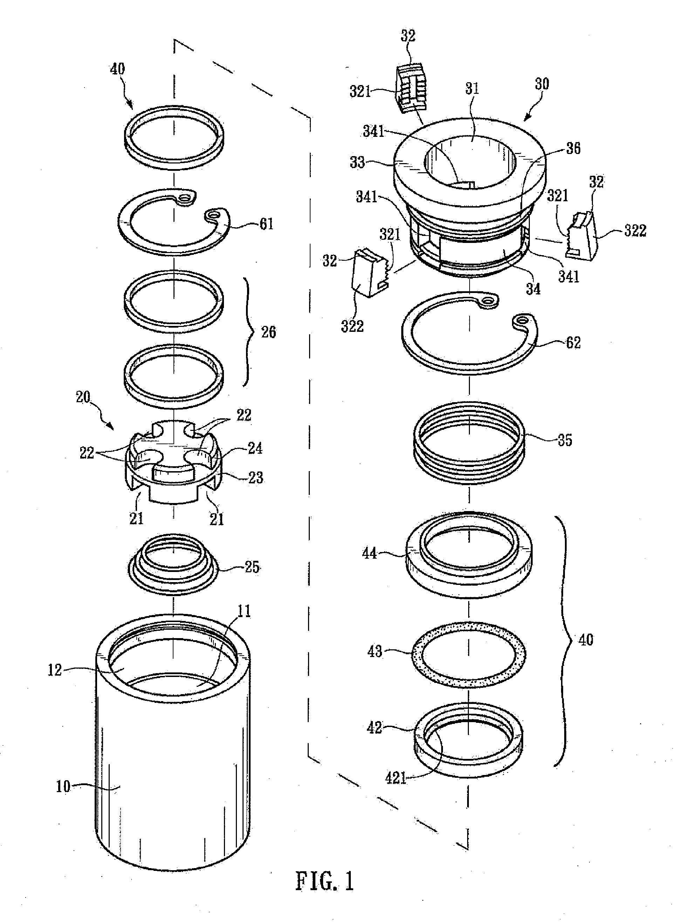

Referring to FIGS. 1∼3, the valve block **20** has a base **23** and a shaft **24** formed integral with one side of the base **23.** The diameter of the shaft **24** is smaller than the base **23.** The shaft **24** has a plurality of grooves, configuring the output ports **22.** The base **23** has input ports **21** formed therein. The outer diameter of the base **23** is smaller than the diameter of the accommodation open chamber **11** of the casing **10** such that a gap **"s"** is defined between the inner diameter of the casing **10** and the outer diameter of the base **23** and disposed in communication between the input ports **21** and the output ports **22.** A spring member **25** is set between the valve block **20** and the first end of the casing **10.** Gasket rings **26** are mounted in the casing **10** above the valve block **20.** The spring member **25** imparts a pressure to the valve block **20,** holding the valve block **20** against the gasket rings **26** (i.e., the aforesaid close position). At this time, the gasket rings **26** seal the passage between the input ports **21** and the output ports **22,** and the flow of air or fluid cannot pass from the input ports **21** to the output ports **22.**

The locking block holder **30** has a hollow cylindrical holder body **34** and a rim **33** at the top side of the hollow cylindrical holder body **34.** The hollow cylindrical holder body **34** is inserted into the casing **10,** keeping the rim **33** outside the casing **10** and spaced from the second end of the casing **10** a distance. The hollow cylindrical holder body **34** has a plurality of openings **341** equiangularly spaced around the periphery in communication with the center through hole **31** for accommodating the locking blocks **32,** and an outside annular flange **36** extending around the periphery above the openings **341.** Each locking block **32** has a sloping outside wall **322.** The engagement face **321** of each locking block **32** is a toothed face formed on the inner side opposite to the sloping outside wall **322.** The casing **10** has a tapered inside wall portion **121,** which defines with the second end of the accommodation open chamber **11** a conical space **12** within which the locking blocks **32** are moved between the locking position and the unlocking position. The sloping outside wall **322** of each locking block **32** is kept in close contact with the tapered inside wall portion **121** of the casing **10.** Further, a spring member **35** is mounted inside the casing **10** and stopped between the sealing structure **40** and the locking block holder **30,** supporting the locking block holder **30** in the locking position.

The sealing structure **40** is comprised of a holding down ring **42,** a seal ring **43,** and a sealing cap **44.** The tightening up ring **42,** the seal ring **43** and the sealing cap **44** are set in the accommodation open chamber **11** of the casing **10** in proper order, defining the aforesaid center opening **41.** The spring member **35** is set between the sealing cap **44** and the locking block holder **30.** The holding down ring **42** has an inside annular flange **421.**

Further, two C-shaped retainers **61** and **62** are respectively fastened to the inside wall of the accommodation open chamber **11** of the casing **1.** One C-shaped retainer **61** is set between the valve block **20** and the sealing structure **40** to support the holding down ring **42.** The other C-shaped retainer **62** is secured to the second end of the accommodation open chamber **11** of the casing **10** for stopping against the outside annular flange **36** of the locking block holder **30** to prohibit the locking block holder **30** from falling out of the casing **10.**

Referring to FIG. 4, when one end of the pipe **50** is inserted into the center through hole **31** of the locking block holder **30** and the center opening **41** of the sealing structure **40** and stopped against the valve block **20,** the valve block **20** is forced to compress the spring member **25** and moved away from the gasket rings **26** to the open position for allowing the flow of air or fluid to pass from the input ports **21** through the gap **"s"** to the inside of the pipe **50** via the output ports **22.** The sealing structure **40** and the pipe **50** are tightly secured together, and the inside annular flange **421** of the holding down ring **42** is compressed against the outside wall of the pipe **50** to prevent a leakage. Further, the locking block holder **30** is forced by the spring member **35** outwards relative to the casing **10** from the unlocking position to the locking position, causing the locking blocks **32** to be forced transversely inwards toward the center through hole **31** of the locking block holder **30** by the tapered inside wall portion **121,** and therefore the toothed engagement face **321** of each locking block **32** is forced into engagement with the periphery of the pipe **50** to lock the pipe **50** to the casing **10.**

Referring to FIG. 5, when applied an external force to press the rim **33** of the locking block holder **30** toward the casing **10** to compress the spring member **35** (i.e., from the locking position toward the unlocking position), the gradually increasing conical space **12** releases the pressure from the locking blocks **32,** allowing the pipe **50** to be removed from the locking block holder **30.** After removal of the pipe **50** from the locking block holder **30,** the spring member **25** immediately returns the valve block **20,** forcing the base **23** of the valve block **20** against the gasket rings **26,** and therefore the output ports **22** are blocked.

As shown in FIGS. 4 and 5, when the pipe **50** is disconnected from the pipe connector, the pipe connector is closed. On the contrary, when the pipe **50** is installed in the pipe connector, the pipe connector is opened, allowing the flow of air or fluid to flow into the pipe **50.** In actual practice, the pipe **50** is kept away from the valve block **20** at the beginning when one end of the pipe **50** is inserted into the locking block holder **30,** and the pipe **50** is pushed forwards to move the valve block **20** to the close position after installation of the piping. The invention does not need any supplementary tool when mounting or dismounting the pipe.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A pipe connector comprising:
a cylindrical casing, said cylindrical casing having an accommodation open chamber longitudinally extending through two distal ends thereof, said accommodation open chamber having a first end and a second end;
a valve block mounted in the first end of said accommodation open chamber and axially movable from between a close position and an open position, said valve block having at least one input port and at least one output port, said at least one output port being closed when said valve block is in said close position, said at least one output port being opened when said valve block is in said open position;
a locking block holder mounted in the second end of said accommodation open chamber and axially movable between a locking position and an unlocking position, said locking block holder having a center through hole for receiving a pipe;
a plurality of locking blocks respectively transversely movably mounted in said locking block holder, said locking blocks each having an engagement face, the engagement face of each of said locking blocks being respectively forced into the center through hole of said locking block holder to engage the pipe being inserted into the center through hole of said locking block holder when said locking block holder is in said locking position, the engagement face of each of said locking blocks being respectively disengaged from the pipe being inserted into the center through hole of said locking block holder when said locking block holder is in said unlocking position; and
a sealing structure mounted in said accommodation open chamber between said valve block and said locking block holder, said sealing structure defining a center opening for receiving the pipe that is inserted into the center through hole of said locking block holder.

2. The pipe connector as claimed in claim 1, wherein said valve block has a base and a shaft formed integral with one side of said base; said at least one output port is respectively formed on said shaft; said at least one input port is respectively formed on said base.

3. The pipe connector as claimed in claim 2, further comprising at least one gasket ring mounted in said accommodation open chamber and adapted to block the passage between said at least one input port and said at least one output port when said valve block is moved to said close position.

4. The pipe connector as claimed in claim 2, further comprising a spring member mounted inside said cylindrical casing and stopped between the first end of said accommodation open chamber and said base of said valve block to support said valve block in said close position.

5. The pipe connector as claimed in claim 1, wherein said locking block holder has a hollow cylindrical holder body and a rim at a top side of said hollow cylindrical holder body, said hollow cylindrical holder body being inserted into the second end of said accommodation open chamber, said rim being kept outside said cylindrical casing, said hollow cylindrical holder body having a plurality of openings equiangularly spaced around the periphery thereof in communication with the center through hole of said locking block holder for accommodating said locking block.

6. The pipe connector as claimed in claim 5, wherein the engagement face of each of said locking blocks is toothed.

7. The pipe connector as claimed in claim 6, wherein said locking blocks each have a sloping outside wall disposed at an outer side opposite to the respective engagement face; said casing has a tapered inside wall portion, which defines with the second end of said accommodation open chamber a conical space within which said locking blocks are moved between said locking position and said unlocking position.

8. The pipe connector as claimed in claim 5, further comprising a spring member set between said locking block holder and said sealing structure to support said locking block holder in said locking position.

9. The pipe connector as claimed in claim 1, wherein said sealing structure comprises a holding down ring, a seal ring, and a sealing cap set in proper order in said accommodation open chamber.

10. The pipe connector as claimed in claim 9, wherein said holding down ring has an inside annular flange for stopping against the periphery of the pipe, which is inserted into the center through hole of said locking block holder.
